# EUROPÄISCHE PATENTSCHRIFT

(11) **EP 3 983 897 B1**
(45) Veröffentlichungstag und Bekanntmachung des Hinweises auf die Patenterteilung: **24.04.2024**
(21) Anmeldenummer: 20743960.5
(22) Anmeldetag: 04.06.2020
(51) Int. Cl.: G06F 11/07, G06F 11/30, B60W 50/02

(54) **VERFAHREN ZUM SICHERSTELLEN UND AUFRECHTERHALTEN DER FUNKTION EINES SICHERHEITSKRITISCHEN GESAMTSYSTEMS**
METHOD FOR ENSURING AND MAINTAINING THE FUNCTION OF A COMPLETE SAFETY-CRITICAL SYSTEM
PROCÉDÉ POUR GARANTIR OU MAINTENIR LA FONCTION D'UN SYSTÈME GLOBAL CRITIQUE POUR LA SÉCURITÉ

(30) Priorität: 14.06.2019 DE 102019208729
(43) Veröffentlichungstag der Anmeldung: 20.04.2022
(73) Patentinhaber: Continental Autonomous Mobility Germany GmbH, 85057 Ingolstadt (DE)
(72) Erfinder: KASCHA, Reinhold, 90411 Nürnberg (DE); HALILOVIC, Mirza, 90411 Nürnberg (DE); GURZAWSKI, Timo, 90411 Nürnberg (DE)
(74) Vertreter: Continental Corporation
(86) Internationale Anmeldenummer: PCT/DE2020/200042
(87) Internationale Veröffentlichungsnummer: WO 2020/249169

(56) Entgegenhaltungen:
- US-A1- 2009 295 559
- US-A1- 2011 153 535
- US-B1- 8 806 277

## Beschreibung

Die vorliegende Erfindung betrifft ein Verfahren zum Sicherstellen und/oder Aufrechterhalten der Funktion eines komplexen sicherheitskritischen Gesamtsystems, ein Gesamtsystem, welches seine jeweilige Funktion insbesondere anhand eines erfindungsgemäßen Verfahrens sicherstellt und/oder aufrechterhält sowie ein Computerprogramm mit Programmcode zur Durchführung des erfindungsgemäßen Verfahrens.

### Technologischer Hintergrund

Moderne Fortbewegungsmittel wie Kraftfahrzeuge oder Motorräder werden zunehmend mit Fahrerassistenzsystemen ausgerüstet, welche mit Hilfe von Sensorsystemen die Umgebung erfassen, Verkehrssituationen erkennen und den Fahrer unterstützen, z. B. durch einen Brems- oder Lenkeingriff oder durch die Ausgabe einer optischen oder akustischen Warnung. Als Sensorsysteme zur Umgebungserfassung werden regelmäßig Radarsensoren, Lidarsensoren, Kamerasensoren oder dergleichen eingesetzt. Aus den durch die Sensoren ermittelten Sensordaten können anschließend Rückschlüsse auf die Umgebung gezogen werden, womit z. B. eine Objekt- und/oder Umgebungsklassifizierung bzw. ein Umfeldmodell erstellt werden kann. Ferner ist die Umgebungserfassung nahezu unverzichtbar im Bereich des (teil-) autonomen Fahrens, sodass ein besonderes Interesse an der Fort- und Weiterentwicklung der entsprechenden Systeme besteht. Ferner ist gerade im Bereich des (teil-) autonomen Fahrens die Kurvenerkennung anhand von Objektdetektionen von großer Bedeutung, da eine autonome Planung von Trajektorien entlang der Streckenführung ohne eine derartige Kurvenerkennung nur schwer umsetzbar ist.

Aufgrund von aktuellen Automatisierungstrends bei der Automobilindustrie insbesondere im Bereich derartiger Assistenzsysteme bis hin zum autonomen Fahren lassen die Komplexität elektronischer und elektrischer Komponenten sowie die Anforderungen an deren Verfügbarkeit und funktionaler Sicherheit rapide anwachsen. Dabei ist die fehlerfreie Funktion der Komponenten im Einzelnen und die fehlerfreie Zusammenarbeit dieser Komponenten ausschlaggebend für einen fehlerfreien Verkehrsbetrieb. Bei der Zusammenarbeit von unterschiedlichen Komponenten und Funktionalitäten und Subfunktionalitäten ist insbesondere die Hard- und Softwarearchitektur von besonderer Bedeutung.

Die ISO 26262 ("Road vehicles - Functional safety") für sicherheitsrelevante elektronische/elektrische (E/E) Systeme in Kraftfahrzeugen definiert das Vorgehensmodell zusammen mit den geforderten Aktivitäten und Arbeitsprodukten sowie die anzuwendenden Methoden in derer Entwicklung und Produktion. Die Umsetzung der ISO 26262 soll die funktionale Sicherheit eines Systems mit E/E Komponenten im Kraftfahrzeug gewährleisten. Dabei werden die Entwicklungsprozesse auf Softwareebene in Anlehnung an geschachtelte V-Modelle behandelt und die erforderlichen Vorgehensweisen und Arbeitsergebnisse definiert. Beispielsweise soll die Implementierung der funktionalen Sicherheit in der Software auf Basis einer Spezifikation der Software-Sicherheitsanforderungen erfolgen. Idealerweise ist die Spezifikation der Software-Sicherheitsanforderungen von ihrer internen Struktur her an die zu verwendende Software bzw. die angestrebte Softwarearchitektur eng ausgerichtet.

Insbesondere wird hierzu die sogenannte AUTOSAR (AUTomotive Open System ARchitecture) Architektur eingesetzt. Es handelt sich hierbei um eine offene und standardisierte Softwarearchitektur für elektronische Steuergeräte (sogenannte Electronic Control Units; kurz ECU). Gemäß AUTOSAR Architektur berichten verschiedene Monitore ihre Überwachungsergebnisse (Ereignisstatus) an einen Ereignisdiagnosemanager bzw. Diagnostic Event Manager (DEM), welcher diese dann an einen sogenannten Funktionssperrmanager bzw. Function Inhibition Manager (FIM) weiterleitet. Der Funktionssperrmanager ist in der AUTOSAR Architektur die Komponente, die für das Systemverfügbarkeitsmanagement verantwortlich ist. Die Ausgangsinformationen des Funktionssperrmanagers sind die aus dem Ereignisstatus berechneten logischen Verfügbarkeiten für die jeweiligen Subfunktionalitäten, in die ein Gesamtsystem in passender Weise dekomponiert sein muss. Es besteht daher ein Interesse daran, bei der Systementwicklung auf der Softwareebene eine derartige Dekomposition vorzunehmen und zu spezifizieren. Zudem müssen über die Systementwicklung auf der Softwareebene für jede einzelne der Subfunktionalitäten aus der Gesamtheit der im System auftretenden Ereignisse diejenigen herausgearbeitet werden, die ursächlichen Einfluss auf ihre Verfügbarkeit haben. Dies dient dann ebenfalls als Grundlage für die Umsetzung. Daraus resultieren jedoch Umsetzungsschwierigkeiten und eine hohe Fehleranfälligkeit, da bereits in überschaubaren Systemen jeweils mehrere (z. B. hunderte) Ereignisse und Subfunktionalitäten verwaltet werden müssen, wobei jedes Ereignis mit jeder Subfunktionalität auf ihre Relevanz hin untersucht und dokumentiert werden muss. Dieser Nachteil ist im Wesentlichen auf eine flache Struktur von sogenannten Funktionsidentifizierer bzw. Funktionsidentifikatoren (Function Identifier FID) zurückzuführen, welche dazu vorgesehen sind, die jeweiligen Subfunktionalitäten zu identifizieren.

### Druckschriftlicher Stand der Technik

Eine Lösung des aufgezeigten Problems wird in WO 2008/065059 A1 beschrieben. Dort wird vorgeschlagen, zwischen den Subfunktionalitäten Abhängigkeiten zu berücksichtigen, wie es sie in reellen Systemen rein physikalisch gibt (eine Subfunktion kann nicht korrekt ausgeführt werden, wenn ein Sensor oder ein Aktuator defekt sind, von denen sie abhängig ist). So entsteht ein Graph aus Verfügbarkeiten der Subfunktionalitäten, in dem man die Überwachungsergebnisse der Monitore nur den unmittelbar betroffenen Subfunktionalitäten zuführen muss und die sich dann zu den abhängigen Subfunktionalitäten entlang der Abhängigkeitspfade automatisch fortpflanzen. Dadurch wird die Anzahl der Abhängigkeiten pro Subfunktionalität zu einigen Wenigen reduziert, was die Aufwände und die Fehleranfälligkeit sowohl in der Systementwicklung auf der Softwareebene sowie in der Softwareentwicklung drastisch reduziert. Allerdings sind die Subfunktionalitäten wie in WO 2008/065059 A1 beschrieben im Gegensatz zu den logischen Verfügbarkeiten des AUTOSAR sehr komplexe Gebilde mit einer sehr komplexen Handhabung, was wiederum einen gewichtigen Nachteil darstellt.

Ferner hat auch das Konzept eines Graphen in AUTOSAR Einzug genommen. In AUTOSAR ist dabei vorgesehen, dass Monitore ihren Dienst permanent und aus dem Zusammenhang gerissen verrichten (sie überwachen Komponenten z. B. selbst dann, wenn sie abgeschaltet sind, was zwangsläufig zur unberechtigten Erkennung von Fehlern führt), so dass der Bedarf besteht, die Überwachungsergebnisse im Nachhinein aufwendig zu filtern, wofür entsprechende manuell konfigurierbare Mechanismen vorgesehen sind, wodurch zusätzliche Kosten entstehen. Ein Graph ist hier lediglich ein weiterer Mechanismus um die Eintragung von Folgefehlern zu unterbinden. Ferner können auch, basierend auf WO 2008/065059 A1, Monitore als Subfunktionalitäten behandelt werden, indem sie in den Abhängigkeitsgraphen integriert sind und so, bei Bedarf abgeschaltet werden, so dass eine nachträgliche Filterung von deren Ergebnissen entfällt, jedoch sind derartige Monitor-Subfunktionalitäten ebenfalls schwer handhabbare und höchst komplexe Gebilde.

Ferner spezifiziert AUTOSAR den Betrieb FIMs in reiner Client-Server Architektur unterstützt durch die Laufzeitumgebung (Runtime Environment; RTE). Der FIM nimmt dabei die Rolle eines zentralen Servers an, an dem die Überwachungsergebnisse der Monitore zusammenlaufen und von dem aus die berechneten Verfügbarkeiten der Subfunktionalitäten zu den Empfängern verteilt werden. Diese Signale durchlaufen in Multi-Core-Prozessoren, Multiprozessor- und Multi-ECU Systemen zuweilen beschwerliche Wege, die Quelle von unzulässigen Verzögerungen und gar Übertragungsausfällen sein können. Im letzteren Fall ist/sind dann der Signalsender bzw. Empfänger gänzlich vom Server abgeschnitten und seines "Entscheiders" beraubt. Man könnte zwar auf jedem der Prozessoren eines verteilten Systems einen eigenen FIM instanziieren (falls AUTOSAR Stack vorhanden), dennoch bliebe das Problem des gegenseitigen Abgleichs der Ergebnisse ungelöst, da jeder dieser FIMs völlig autark arbeiten würde. Unter "Abgleich" wird hier verstanden, dass, im einfachsten Fall, eine Instanz die Ergebnisse einer anderen Instanz berücksichtigt und, im etwas komplexeren Fall, zwei oder mehrere Instanzen Teilberechnungen durchführen und ihre Teilergebnisse zum gemeinsamen Endergebnis zusammenführen.

Ferner kann, basierend auf WO 2008/065059 A1, eine echte über maximal zwei Instanzen verteilte Verfügbarkeitsbestimmung realisiert werden, indem die Subfunktionalitätsgraphen der unterschiedlichen Instanzen über gemeinsame Knoten miteinander verbunden werden. Die Verfügbarkeit dieser gemeinsamen Knoten, auch verteilte Subfunktionalitäten genannt, werden anteilig in zwei diversen Instanzen berechnet und über den Kommunikationsweg aufeinander abgestimmt. So können in jeder Instanz die lokalen Verfügbarkeiten auf die Überwachungsergebnisse der lokalen Monitore hin verzögerungsfrei bestimmt und die andere Instanz mittels des vorhandenen Kommunikationskanals über die möglichen Nicht-Verfügbarkeiten benachrichtigt werden. Beide Instanzen sollen dann die Verfügbarkeit ihrer eigenen Subfunktionalitäten im abhängigen Teilgraphen automatisch anpassen. Beim Ausfall der Kommunikation bleiben diese Instanzen jedoch weiterhin funktionsfähig, ohne gegenseitigen Abgleich. Nachteilig ist dabei, dass Subfunktionalitäten nur über zwei Instanzen verteilt werden können und deren Abgleich asymmetrisch stattfindet. Nur eine der beiden Instanzen ist dann in der Lage, die Verfügbarkeit ihrer eigenen Subfunktionalitäten im abhängigen Teilgraphen automatisch dem Ergebnis der anderen Instanz anzupassen. Das ist ein Tribut an die drohenden Deadlocks, welcher beschreibt, dass eine Subfunktionalität nach dem Wegfall der Degradationsursache nicht wiederhergestellt werden kann, da sich die zwei Instanzen gegenseitig degradieren.

Ferner ist aus der US 2011/153535 A1 ein gattungsgemäßes Verfahren zur Aufteilung eines Systems in hierarchische Subsysteme sowie zur Ereignis-Propagierung zum Monitoring von Funktionen bekannt.

### Aufgabe der vorliegenden Erfindung

Die Aufgabe der vorliegenden Erfindung besteht nunmehr darin, ein gattungsgemäßes Verfahren und System zur Verfügung zu stellen, durch das die Nachteile aus dem Stand der Technik in kostengünstiger Weise überwunden werden.

### Lösung der Aufgabe

Die vorstehende Aufgabe wird durch die gesamte Lehre des Anspruchs 1 sowie der nebengeordneten Ansprüche gelöst. Zweckmäßige Ausgestaltungen der Erfindung sind in den Unteransprüchen beansprucht.

Bei dem erfindungsgemäßen Verfahren zum Sicherstellen oder Aufrechterhalten der Funktion eines komplexen sicherheitskritischen Gesamtsystems eines Fahrzeugregelungssystems bzw. Assistenzsystems wird beim Auftreten eines Ereignisses im Gesamtsystem das Ereignis (oder die Ereignisse) zunächst analysiert und diejenigen Subfunktionalitäten ermittelt, die von dem aufgetretenen Ereignis betroffen sind. Das Gesamtsystem wird dabei nach den Erkenntnissen der Ereignisanalyse in voneinander abhängige Subfunktionalitäten unterteilt, wobei mittels eines Funktionsidentifikators eine logische Verfügbarkeitsaussage über die jeweiligen Subfunktionalitäten anhand der Ereignisdiagnose erstellt bzw. getroffen wird. Die logische Verfügbarkeitsaussage kann dabei in "verfügbar" oder "nicht verfügbar" eingeteilt werden. Zudem können keine weiteren definierbaren bzw. auswählbaren Modi unterstützt werden (es gibt dementsprechend auch kein Auswahlsystem). Darüber hinaus bilden die Subfunktionalitäten Graphen. Die vorliegende Erfindung stellt dabei ein kostengünstiges und effizientes Verfahren zum Verfügbarkeitsmanagement einzelner Komponenten sowie Komponentenverbunde für sicherheitskritische Anwendungen in Kraftfahrzeugen zwecks Gewährleistung derer funktionalen Sicherheit und maximal möglicher Verfügbarkeit dar.

Zweckmäßigerweise können innerhalb des Gesamtsystems auch mehrere Graphen vorgesehen sein bzw. berechnet werden.

Ferner können die Graphen der Subfunktionalitäten aufeinander abgestimmt werden, wenn eine Kommunikation zwischen diesen verfügbar ist.

Ferner werden die Subfunktionalitäten derart in Graphen zusammengefasst, dass diese innerhalb einer funktionellen Einheit (z. B. einem Rechnermodul oder einer Verarbeitungseinheit) gemeinsam verarbeitet werden.

Dadurch, dass die Verbindung der Graphen anhand gemeinsamer Subfunktionalitäten erfolgt, kann deren Verfügbarkeit verteilt berechnet werden, sodass die Ergebnisse der lokalen Monitore ohne Verzögerung zu den entsprechenden lokalen Verfügbarkeitsentscheidungen führen, unabhängig von der Verfügbarkeit der Kommunikationswege zu anderen Graphen bzw. dieser Graphen selbst. Bei Verfügbarkeit der Kommunikationswege können lokal getroffene Verfügbarkeitsentscheidungen systemweit berücksichtigt werden.

Gemäß der vorliegenden Erfindung erfolgt eine zweistufige Realisierung der jeweiligen verteilten Subfunktionalitäten, wobei zunächst lokale Verfügbarkeiten der Subfunktionalitäten der Graphen ermittelt und anschließend mit Subfunktionalitäten anderer Graphen systemweit ausgetauscht werden. Daraus resultiert der Vorteil, dass Subfunktionalitäten auf beliebig viele Graphen ohne Gefahr eines Deadlocks verteilt werden können. Die nicht verteilten Subfunktionalitäten können in praktischer Weise auch einstufig realisiert werden.

Zweckmäßigerweise kann anhand der Ereignisanalyse ein Ereignisstatus ermittelt werden, wobei die jeweiligen Ereignisstatus als Subfunktionalitäten behandelt werden und Bestandteil der Systemunterteilung sind, d. h. die jeweiligen Monitore können als Subfunktionalitäten behandelt werden und Bestandteil der Systemdekomposition sein.

Zweckmäßigerweise kann jeder Monitor bzw. Ereignisstatus automatisch auf einen Status gesetzt werden, welcher anzeigt, dass dieser nicht verfügbar ist, sobald er durch den Funktionsidentifikator (FID) deaktiviert wurde. Beispielsweise kann der Status eines Monitors auf "NOTTESTED" gesetzt werden, sobald er durch den Funktionsidentifikator deaktiviert wird, d. h. es erfolgt ein automatisches Setzen des internen Ereignisstatus "NOTTESTED" für deaktivierte und diesbezüglich konfigurierte Monitore.

Vorzugsweise wird eine Softwarekonfiguration und/oder die einschlägigen Testfälle (z. B. elementare, funktionale Softwaretests, die der Überprüfung der Konformität der Softwarekonfiguration mit den jeweiligen Anforderungen dienen) automatisch aus den Anforderungen an das Gesamtsystem generiert. In praktischer Weise kann somit die Konfiguration bzw. Applikation des Gesamtsystems sowie eine diversitär ausgeführte Testfallgenerierung automatisch aus den jeweiligen Anforderungen erfolgen. Der Bedarf manueller Programmierung zwecks Applikation auf Softwareebene entfällt. Der Entwicklungsaufwand wird auf die Erstellung der Anforderungen auf der Softwareebene reduziert.

In einfacher Weise können zunächst die lokalen Verfügbarkeiten der Subfunktionalitäten ermittelt und anschließend ausgetauscht, aufeinander abgestimmt und systemweit eingesetzt werden.

Zweckmäßigerweise kann das Gesamtsystem in unterschiedliche Partitionen aufgeteilt sein. Insbesondere können die Partitionen eine Performance-Verarbeitungspartition (PPP) zur Verarbeitung, eine Sicherheits-Verarbeitungspartition (SPP) und eine elektrische Energieversorgung (EPS), insbesondere zur Sicherheitsüberwachung, sowie eine Ethernet-Partition (EP) zur Kommunikation umfassen.

Dadurch, dass die Verarbeitungspartition (PPP), die Sicherheits-Verarbeitungspartition (SPP) und die elektrische Energieversorgung (EPS) jeweils einen Prozessor aufweisen und ihre Prozessorressourcen und Programmausführung jeweils selbstständig und automatisch überwachen wird die Sicherheit in besonderem Maße verbessert.

Zudem kann eine gegenseitige Funktionsüberwachung der Verarbeitungspartition (PPP), der Sicherheits-Verarbeitungspartition (SPP) und/oder der elektrischen Energieversorgung (EPS) vorgesehen sein. Dadurch kann eine zusätzliche Fehlerüberwachung implementiert werden, sodass die Sicherheit des Gesamtsystems noch zusätzlich verbessert wird.

Neben- oder untergeordnet beansprucht die vorliegende Erfindung ein Gesamtsystem eines Fahrzeugregelungssystem, insbesondere umfassend ein Steuergerät (Electronic Control Unit ECU oder Electronic Control Module ECM) oder eine ADCU bzw. AuDCU (Assisted and Automated Driving Control Unit), welches zum Sicherstellen oder Aufrechterhalten der Funktion vorzugsweise ein erfindungsgemäßes Verfahren verwendet. Ferner wird beim Auftreten eines Ereignisses im Gesamtsystem das Ereignis zunächst durch einen Verfügbarkeitsmanager analysiert. Dann werden diejenigen Subfunktionalitäten ermittelt, die von dem aufgetretenen Ereignis oder den aufgetretenen Ereignissen betroffen sind. Ferner wird das Gesamtsystem anhand der Ereignisanalyse in voneinander abhängige Subfunktionalitäten unterteilt, wobei die Subfunktionalitäten Graphen bilden. Dabei ist ein Funktionsidentifikator vorgesehen, der dazu hergerichtet ist, auf Basis der Ereignisanalyse eine logische Verfügbarkeitsaussage "verfügbar" oder "nicht verfügbar" zu treffen. Ferner werden die Graphen der Subfunktionalitäten innerhalb einer funktionellen Einheit gemeinsam verarbeitet werden, indem die Graphen anhand gemeinsamer Subfunktionalitäten, deren Verfügbarkeit verteilt berechnet wird, verbunden sind, wobei verteilte Subfunktionalitäten zweistufig realisiert werden, wobei zunächst lokale Verfügbarkeiten der Subfunktionalitäten der Graphen ermittelt und anschließend mit Subfunktionalitäten anderer Graphen systemweit ausgetauscht werden.

In einfacher Weise kann das Verfahren auch als computerimplementiertes Verfahren ausgestaltet sein, das eine Ablaufplanung oder eine Vorgehensweise beschreibt, die anhand eines Rechners verwirklicht bzw. durchgeführt wird. Der Rechner, wie z. B. ein Computer, ein Computernetzwerk oder eine andere aus dem Stand der Technik bekannte programmierbare Vorrichtung, kann dabei mittels programmierbarer Rechenvorschriften Daten verarbeiten. In Bezug auf das Verfahren können dabei wesentliche Eigenschaften z. B. durch ein neues Programm, neue Programme, einen Algorithmus oder dergleichen bewirkt werden.

Ferner beansprucht die vorliegende Erfindung hierzu ein Computerprogramm mit Programmcode zur Durchführung eines erfindungsgemäßen Verfahrens, wenn das Computerprogramm in einem Computer ausgeführt wird. Beispielsweise kann das Computerprogramm hierzu auf einem computerlesbaren Speichermedium hinterlegt sein.

### Beschreibung der Erfindung anhand von Ausführungsbeispielen

Im Folgenden wird die Erfindung anhand von zweckmäßigen Ausführungsbeispielen näher erläutert. Es zeigen:
- Fig. 1: eine vereinfachte schematische Darstellung einer Ausgestaltung eines gattungsgemäßen Systems nach dem Stand der Technik;
- Fig. 2: eine vereinfachte schematische Darstellung einer ersten Ausgestaltung eines erfindungsgemäßen Systems;
- Fig. 3: eine vereinfachte schematische Darstellung einer Ausgestaltung eines erfindungsgemäßen Systems mit einer über zwei Graphen verteilten Subfunktionalität;
- Fig. 4: eine vereinfachte schematische Darstellung einer Ausgestaltung eines automatischen Ausweichens auf eine redundante Ressource;
- Fig. 5: eine vereinfachte schematische Darstellung einer Ausgestaltung einer zweistufigen Subfunktionalitätsverteilung zur Vermeidung von Deadlocks;
- Fig. 6: eine vereinfachte schematische Darstellung einer Ausgestaltung des Verfügbarkeitsmanagement für eine AuDCU, sowie
- Fig. 7: eine vereinfachte schematische Darstellung einer Ausgestaltung eines verteilten, situationsspezifischen Verfügbarkeitsmanagements.

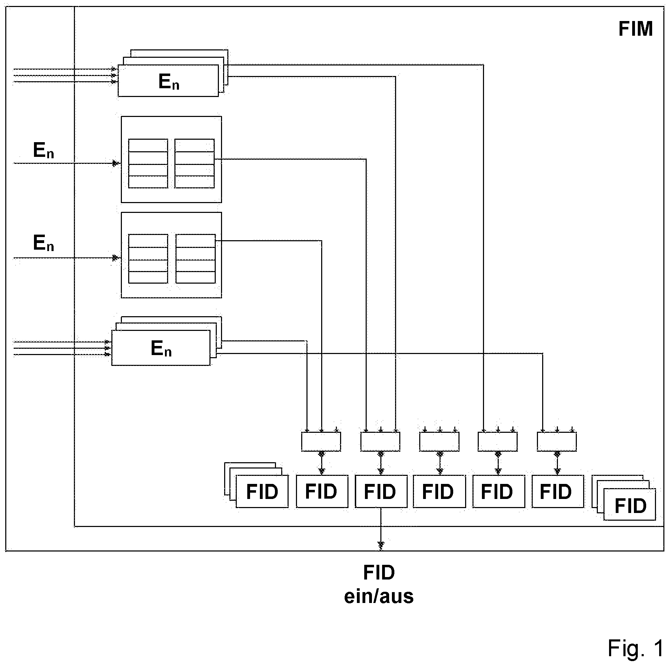

In Fig. 1 ist eine Ausgestaltung eines gattungsgemäßen Funktionensperrmanagers bzw. Function Inhibition Manager (FIM) nach dem Stand der Technik dargestellt, wobei die Eingangsinformation des FIM die Überwachungsergebnisse der Monitore (Ereignisstatus der beobachteten Ereignisse Eₙ) darstellen, die er von einem Ereignisdiagnosemanager bzw. Diagnostic Event Manager DEM (in Fig. 1 nicht dargestellt) empfängt. Die Ausgangsinformation sind die aus dem Ereignisstatus (zumindest FAILED, aber auch TESTED, NOTTESTED usw.) berechneten logischen Verfügbarkeiten für die jeweiligen Subfunktionalitäten (identifizierbar über einen Funktionsidentifikator bzw. Function Identifier FID), in die ein Gesamtsystem in passender Weise dekomponiert sein muss. Ferner kann als Ausgang der jeweilige FID aktiviert ("ein", "on") oder deaktiviert ("aus", "off") werden.

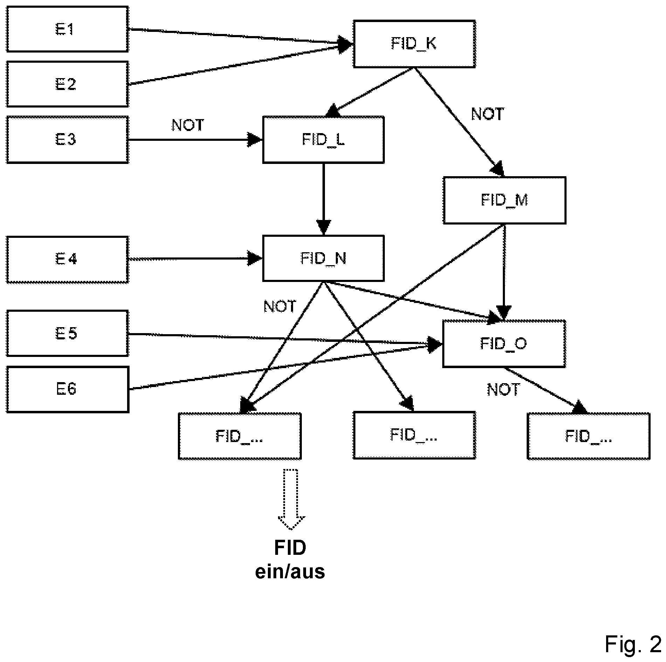

Um eine derartige Dekomposition vorzunehmen und zu spezifizieren verbindet die vorliegende Erfindung die Vorzüge der AUTOSAR Spezifikation im Allgemeinen, insbesondere aber der FIM Spezifikation, mit einem verteilten, mehrfachereignisfähigen und Graph-basierten Ansatz. Es wird hierbei von der flachen Subfunktionalitätsstruktur des AUTOSAR abgesehen. Die Subfunktionalitäten werden in Abhängigkeiten zueinander gebracht entsprechend ihren physikalischen Abhängigkeiten im reellen System. Dadurch entsteht ein Graph (d. h. eine geordnete Menge von Knoten und gerichteten Kanten), dessen Knoten die Ereignisse und Subfunktionalitäten darstellen. Hierbei wird auf die aus WO 2008/065059 A1 bekannte komplexe interne Darstellung der Subfunktionalitäten zugunsten der einfachsten Darstellung (logisch "verfügbar" oder "nicht verfügbar") als Funktionsidentifikator FID verzichtet, wie in Fig. 2 dargestellt. Die jeweiligen Ereignisse E1-E6, wie z. B. auch auftretende Fehler, Fehlfunktionen oder dergleichen, sind gleichzeitig die Eingangsinformationen vom Ereignisdiagnosemanager DEM (Diagnostic Event Manager). Die AUTOSAR Schnittstellen bleiben dabei unverändert, da eine Proxy-Funktion vorgesehen ist, um auch den Einsatz in sicherheitsrelevanten Systemen zu ermöglichen.

Zweckmäßigerweise werden dabei die Monitore nicht anders als andere Subfunktionalitäten behandelt: sie werden über ihre eigenen Funktionsidentifikatoren, die in den Abhängigkeitsgraphen eingebaut sind, in ihrer Ausführung gesteuert. Somit entfällt automatisch und im Rahmen eines einheitlichen Konzepts die Notwendigkeit des nachträglichen Filterns der Überwachungsergebnisse. Der zuletzt ermittelte Ereignisstatus eines danach über seine Funktionsidentifikatoren deaktivierten Monitors verliert in der Regel seine Aussagekraft, da z. B. kein aktuelles Ergebnis vorliegt, wenn der dazugehörige Monitor inaktiv ist. Eine Ausnahme von dieser Regel stellen die sogenannten Power-On Monitore dar, die per Definition einmalig ausgeführt werden und deren Ergebnis für den gesamten Zyklus verwendet wird. Zweckmäßigerweise wird daher jeder Monitor dahingehend konfiguriert, ob der Status seines Ereignisses automatisch auf "NOTTESTED" gesetzt wird, sobald er per Funktionsidentifikator deaktiviert wird. Der "NOTTESTED" Status hat dann eine konfigurationsgemäße Auswirkung auf den abhängigen Teil des Graphen.

Um beliebige Verfügbarkeitsstrategien realisieren zu können, ist die Unterstützung des Operators NOT - neben dem Operator AND - notwendig. Da die Unterstützung des Operators OR sich durchgehend negativ auf das Gesamtkonzept auswirken würde, kann stattdessen der Einsatz der De Morganschen Gesetze vorgesehen sein. Denn während der Operator NOT im Grunde ein 1-Bit AND mit Negierung ist, kann mittels des Operators OR die Umsetzung einer eigenen Logik erfolgen.

Ein derartiger Graph kann mit syntaktisch identischen Regeln beschrieben werden, z. B. mit: "Verbiete B wenn A {nicht} im <Status> ist", wobei B eine Subfunktionalität ist, die logische Negierung {nicht} optional ist und A eine Subfunktionalität mit den Status <verfügbar, nicht verfügbar> oder ein Ereignis mit den Status <FAILED, TESTED, NOTTESTED, PASSED, NOTPASSED, {...}> sein kann. Dieser Regelsatz stellt die Anforderungen der Systementwicklung auf der Softwareebene an die Softwareentwicklung im Sinne der ISO 26262 dar. Wegen der syntaktischen Identität aller Anforderungen kann daraus in einfacher Weise automatisch die entsprechende Konfiguration für die Software und die einschlägigen Testfälle für den automatisierten Modultest erzeugt werden, wobei der Konfigurations-Codegenerator und der Testfallgenerator bzw. die Testfallgeneratoren diversitär ausgeführt sind. Eine manuelle Programmierung zwecks Applikation auf Softwareebene entfällt somit.

Der Einsatz von Subfunktionalitätsgraphen, wobei für die Subfunktionalitäten die einfachste Darstellung (logisch "verfügbar" oder "nicht verfügbar") zum Einsatz kommt, ist besonders vorteilhaft bei der Rückverfolgung der Ereignisse, die zu einem vorgegebenen (Nicht-) Verfügbarkeitsbild geführt haben.

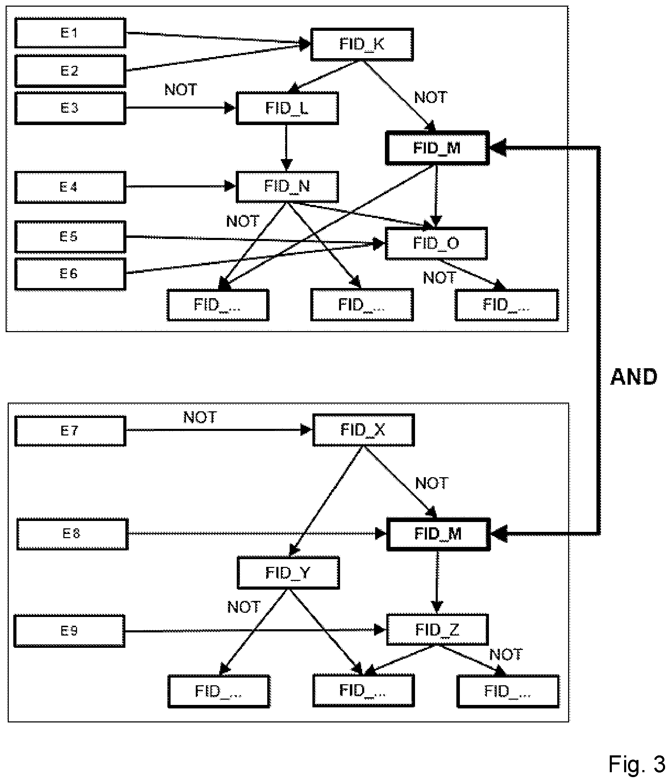

Der Einsatz von Subfunktionalitätsgraphen ist auch besonders vorteilhaft für die Realisierung verteilter Systeme. Verteilte Systeme sind Systeme, in denen ausgewählte Subfunktionalitäten partiell in unterschiedlichen Subfunktionalitätsgraphen an diversen Orten (diverse ECUs, Prozessoren, Cores (Prozessorkerne), Integritätslevel, asynchrone Tasks) berechnet werden und aus diesem Grunde eine Zusammenführung der Teilergebnisse notwendig ist. Eine verteilte Subfunktionalität kann systemweit nur dann als verfügbar angesehen werden, wenn alle Teilergebnisse auf "verfügbar" plädieren. Zur Zusammenführung der Teilergebnisse wird somit insbesondere der Operator AND verwendet, wie in Fig. 3 exemplarisch dargestellt.

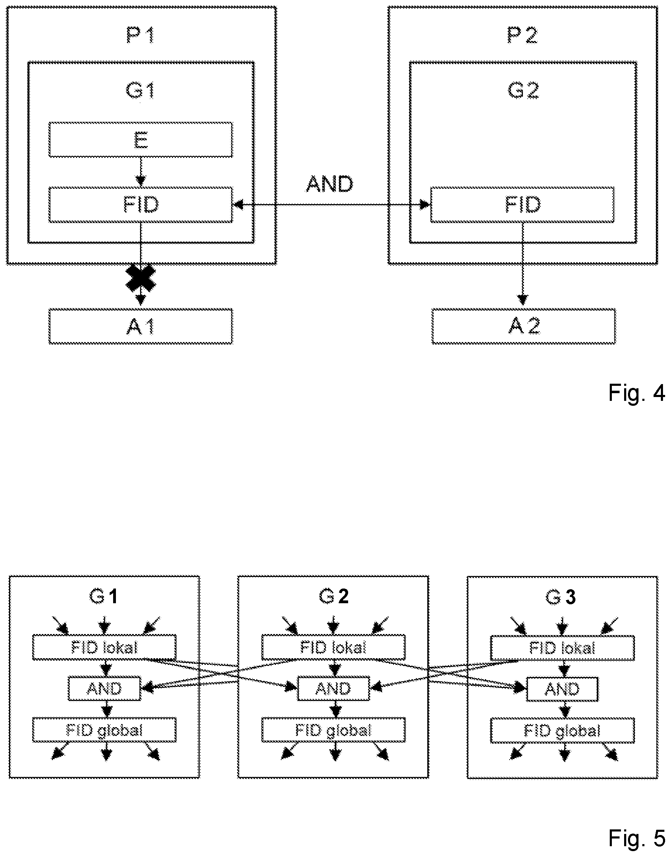

Die Ergebnisse der lokalen Monitore führen ohne Verzögerung zu den entsprechenden lokalen Verfügbarkeitsentscheidungen, unabhängig von der Verfügbarkeit der Kommunikationswege zu anderen Graphen bzw. dieser Graphen selbst. Bei Verfügbarkeit der Kommunikationswege ermöglicht der Austausch der minimalmöglichen Menge an Information (1 Bit bei Nichtberücksichtigung eventueller Maßnahmen zur Absicherung der Kommunikation) die Berücksichtigung aller Abhängigkeiten oberhalb der verteilten Subfunktionalität eines Graphen unterhalb dieser Subfunktionalität im anderen Graphen. Fig. 4 zeigt, eine vorteilhafte Ausgestaltung des Verteilungskonzepts beim Auftreten eines Ereignisses E. Der Prozessor P1 ist dabei für die Berechnung des Graphen G1 zuständig, welcher den Abhängigkeitsgraphen für einen Funktionsidentifikator FID darstellt. In gleicher Weise gilt dies für den Prozessor P2 und den Graphen G2, welches ebenfalls Abhängigkeitsgraph für einen Funktionsidentifikator FID ist. Im vorliegenden Fall muss das Ereignis E nun zwingend zum Abschalten einer sicherheitskritischen Komponente führen und kann somit automatisch auf den redundanten Abschaltpfad A2 ausweichen, wenn der lokale Abschaltpfad A1 defekt ist (wie anhand des Kreuzes in Fig. 4 gezeigt). Dies erfolgt durch die Verbindung der beiden Funktionsidentifikatoren FID durch den Operator AND ("Ver-UND-ung").

Ferner würde eine direkte bilaterale "Ver-UND-ung" der Subfunktionalitäten unweigerlich zum sogenannten "Deadlock" (d. h. eine blockierende Wartesituation zwischen den Subfunktionalitäten) führen: nachdem in einem der Graphen, möglicherweise nur kurzzeitig, ein Ereignis aufgetreten wäre, welches zur Nichtverfügbarkeit der verteilten Subfunktionalitäten führen würde, würde diese Subfunktionalität im Nachhinein über die Wechselwirkung der beiden Graphen dauerhaft im Zustand "nicht verfügbar" verharren und der möglichen Rücknahme des auslösenden Ereignisses nicht mehr folgen. Um diesem Effekt vorzubeugen, können verteilte Subfunktionalitäten zweistufig ausgeführt sein, wie in Fig. 5 gezeigt. Zunächst werden die (Graph-) lokalen Verfügbarkeiten der Subfunktionalitäten ermittelt und anschließend ausgetauscht und nach der "Ver-UND-ung" systemweit eingesetzt. Dieses Konzept gewährleistet eine Deadlock-freie Verteilung der Subfunktionalitäten über beliebig viele Graphen G1, G2, G3 ... Gₙ.

In praktischer Weise können alle relevanten Aspekte der Subfunktionalitätsverteilung per Konfiguration eingestellt werden, wie z. B.: Die Zweistufigkeit der verteilten FIDs, die Einrichtung der notwendigen Kommunikationswege, die Einrichtung der Datenpakete samt Dateninhalte, die Sicherstellung der Kommunikationsfehlerfreiheit (End-to-End Protection mit wahlweiser Fehlerkorrektur) sowie die Überwachung der Kommunikationsfehlerfreiheit. Diese Konfiguration wird aus den Systementwicklungsanforderungen auf der Softwareebene abgeleitet und automatisch per Codegenerator zur Verfügung gestellt, ähnlich der Generierung der Testfälle für die Verteilungsaspekte. Auch hier entfällt der Bedarf manueller Programmierung zwecks Applikation auf Softwareebene. Zudem kann auch die Kommunikation mit / die Anbindung an beliebig viele Ereignisdiagnosemanager DEM bzw. beliebig viele nichtflüchtige Datenspeicher bzw. Non-Volatile Random-Access Memory (NVRAM)-Speicherorte auf der Anforderungsebene ohne Aufwände in der Programmierung bewerkstelligt werden. Ferner kann eine Verteilung der Graphen auf diverse Prozessoren und Steuergeräte (Electronic Control Units bzw. ECUs) erfolgen, die wahlweise mit oder ohne AUTOSAR Stack (heterogene Systeme) implementiert sind, um ihre Zusammenarbeit im Normalfall und ihre autarken Aktivitäten im Nicht-Normalfall zu gewährleisten.

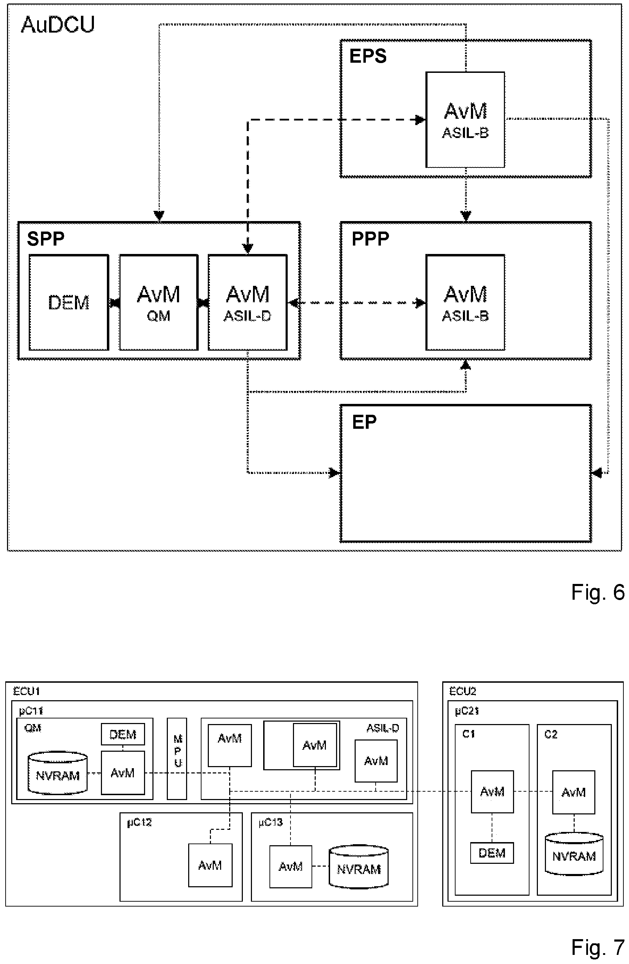

Auf Basis der vorliegenden Erfindung wurde das Sicherheitskonzept einer AuDCU (Automated Driving Control Unit), wie in Fig. 6 exemplarisch gezeigt, umgesetzt. Die AuDCU stellt dabei eine eigensichere Rechenplattform für Funktionen des automatischen Fahrens dar. Damit einhergehend leiten sich hohe Anforderungen an deren Integritätslevel (z. B. ASIL-D) und Verfügbarkeit ab. Um diese Ziele zu erreichen, wurden einer Performance-Verarbeitungspartition bzw. Performance Processing Partition PPP, die in der Regel sehr hohe Rechenkapazitäten bereitstellt, zwei weitere Partitionen beigestellt: die Sicherheits-Verarbeitungspartition bzw. Safety Processing Partition SPP und die elektrische Energieversorgung bzw. Electric Power Supply EPS. Die elektrische Energieversorgung EPS, Sicherheits-Verarbeitungspartition SPP und Performance-Verarbeitungspartition PPP beinhalten programmierbare Prozessoren sowie unterschiedliche Verfügbarkeitsmanager AvM (Availability Manager). Die hoch performante Kommunikation mit der Außenwelt übernimmt eine insbesondere nicht programmierbare Ethernet-Partition EP. Die Sicherheits-Verarbeitungspartition SPP und elektrische Energieversorgung EPS sind hauptverantwortlich für die Systemsicherheit. Sie überwachen dabei alle relevanten Versorgungsspannungen, Temperaturen und dergleichen. Die elektrische Energieversorgung EPS, die Sicherheits-Verarbeitungspartition SPP und die Performance-Verarbeitungspartition PPP überwachen darüber hinaus ihre eigenen Prozessorressourcen inklusive ihrer Programmusführung und können sich auch gegenseitig auf ihre korrekte Funktion hin überwachen. Die Ethernet-Partition EP verfügt zudem über eingebaute Eigentests. Wobei beim Erkennen eines Partitions-lokalen Ereignisses alle (gegebenenfalls noch funktionierenden) Partitionen koordiniert und unterhalb einer vorgegebenen Maximalverzögerung in einen vordefinierten Zustand gebracht werden. Diese Funktion muss selbst beim gleichzeitigen (oder in kurzen Abständen voneinander) Auftreten einer beliebigen Anzahl von Ereignissen an beliebigen Orten in der AuDCU und unabhängig von ihrer Schwere (bis hin zum Totalausfall der Partitionen oder der Kommunikation zwischen denselben) gewährleistet sein. Daraus ergibt sich die Notwendigkeit, auf jeder Partition ein lokales Verfügbarkeitsmanagement zu installieren, um zeitnah und unabhängig von der Verfügbarkeit anderer Partitionen bzw. der Kommunikation mit denselben auf die Partitions-lokalen Ereignisse zu reagieren. Auf der Sicherheits-Verarbeitungspartition SPP sind zudem aus Gründen der Projekt- und Softwarearchitektur, neben ASIL-D auch QM (Qualitätsmanagement) Verfügbarkeitsmanagement für nicht-Plattform spezifische Anwendungen vorzusehen. Hierfür wurde auf der Sicherheits-Verarbeitungspartition SPP eine separate Verfügbarkeitsmanagement Instanz etabliert, um dann mittels einer Speicherverwaltungseinheit bzw. Memory Protection Unit MPU, welche z. B. zur Verwaltung des (Arbeits-) Speicherzugriffs vorgesehen ist, für die nötige Rückwirkungsfreiheit z. B. auf die ASIL-D Instanz zu sorgen. Alle Instanzen sind dabei als Ereignis-Subfunktionalitäts-Graphen ausgeführt.

Die verteilten Verfügbarkeitsmanagement-Instanzen können nicht unabhängig voneinander agieren, solange die ausführenden Prozessoren und die Kommunikation zwischen ihnen intakt sind. Dies erfolgt insbesondere, weil eine Verfügbarkeitsänderung in einer der Instanzen in der Regel Verfügbarkeitsänderungen in den anderen Instanzen nach sich zieht (Beispiel: wenn die elektrische Energieversorgung EPS der Performance-Verarbeitungspartition PPP über einen Abschaltpfad - als gepunkteter Pfeil in Fig. 6 dargestellt - die Versorgungspannung entzieht, muss die Sicherheits-Verarbeitungspartition SPP umgehend die Überwachung der Performance-Verarbeitungspartition PPP einstellen, um nicht eine Reihe von nicht vorhandenen Fehlern zu erkennen). Andererseits, die Instanz, die eine Verfügbarkeitsänderung vorgibt, muss nicht zwingend die Möglichkeit haben, diese umzusetzen (Beispiel: die Sicherheits-Verarbeitungspartition SPP gibt eine Abschaltung der Performance-Verarbeitungspartition PPP Versorgungsspannung vor, verfügt aber über keinen entsprechenden Hardwareanschluss, daher muss die elektrische Energieversorgung EPS die Umsetzung übernehmen). Dieser Transfer der Verfügbarkeitsinformation, in Fig. 6 mittels gestrichelter Pfeile dargestellt, wird mit Hilfe verteilter Subfunktionalitäten realisiert.

Ferner wird die Kommunikation zwischen den Verfügbarkeitsmanagement-Instanzen überwacht. Das Ereignis, dass "die Kommunikation abgebrochen ist" führt in jeder plötzlich lokal gewordenen Instanz zu einer vordefinierten Reaktion. Über die Kommunikationswege zwischen den Verfügbarkeitsmanagement-Instanzen kann schließlich auch der Datenaustausch zu und von der Ereignisanalyse bzw. vom Ereignisdiagnosediagnosemanager DEM realisiert werden. Die beschriebene Funktionalität wird dabei aus einem gemeinsamen Satz an Anforderungen mittels Codegeneratoren sowohl als Konfiguration wie auch als Modultest automatisch auf die drei Prozessoren verteilt.

Die erfindungsgemäße Lösung eignet sich ferner zur kostengünstigen Realisierung verteilter Verfügbarkeitsmanagements in vielen denkbaren Situationen, in denen Systemgrenzen zu überwinden sind. Die Überwindung der Grenzen zwischen Prozessoren bzw. Mikrocontrollern µC sowie unterschiedlichen Integritätslevel innerhalb eines Prozessors und weitere Situationen wird in besonderem Maße vereinfacht, wie exemplarisch in Fig. 7 gezeigt, z. B. Design, Grenzen zwischen verschiedenen Inhouse und/oder 3rd-Party-Funktionen, Grenzen zwischen asynchronen Tasks, Grenzen zwischen unterschiedlichen Integritätslevel, Grenzen zwischen unterschiedlichen Prozessorkernen C1, C2, Grenzen zwischen unterschiedlichen Prozessoren und Grenzen zwischen unterschiedlichen ECUs.

Ferner gewinnen die Grenzen zwischen unterschiedlichen ECUs angesichts der zunehmenden Komplexität der Fahrzeugsysteme zunehmend an Bedeutung. Systeme zum automatisierten bzw. autonomen Fahren bestehen mittlerweile aus einer Vielzahl von Prozessoren, die auf sehr viele, miteinander vernetzte ECUs der Sensoren (Kameras, Radargeräte etc.), der Aktuatoren (Lenkung, Bremse, Parkbremse etc.) sowie den performanten Rechenplattformen verteilt sind, die zusammen sehr komplexe sicherheitskritische verteilte Systeme bilden. Die vorliegende Erfindung ist hierbei besonders geeignet, sowohl die Verfügbarkeit der einzelnen Komponenten wie auch die Verfügbarkeit deren Verbundes effektiv und kostengünstig zu verwalten. Hierzu können die Anforderungen, aus denen die Konfigurationen und die Testfälle der Modultests für das Verfügbarkeitsmanagement automatisch erzeugt werden, wahlweise ECU bezogen, zentral oder gemischt (teils ECU bezogen, teils zentral) verwaltet werden. Es können dabei beliebig viele Diagnosen sowie persistente Speicherblöcke - sogar innerhalb eines Kontexts - unterstützt werden.

### BEZUGSZEICHENLISTE

- PPP: Performance-Verarbeitungspartition bzw. Performance Processing Partition
- SPP: Sicherheits-Verarbeitungspartition bzw. Safety Processing Partition
- EPS: elektrische Energieversorgung bzw. Electric Power Supply
- EP: Ethernet-Partition
- E: Ereignis
- E1...9: Ereignis 1...9
- FID: Funktionsidentifikator bzw. Function Identifier
- AvM: Verfügbarkeitsmanager bzw. Availability Manager
- ASIL: Automotive Safety Integrity Level
- DEM: Ereignisdiagnosemanager bzw. Diagnostic Event Manager
- NVRAM: nichtflüchtige Datenspeicher bzw. Non-Volatile Random-Access Memory
- QM: Qualitätsmanagement bzw. Quality Management
- AuDCU: Automated Driving Control Unit
- ECU: Steuergerät bzw. Electronic Control Unit
- µC: Mikrocontroller
- P1: Prozessor 1
- P2: Prozessor 2
- G1: Graph 1
- G2: Graph 2
- G3: Graph 3
- A1: Abschaltpfad 1
- A2: Abschaltpfad 2
- C1: Prozessorkern 1
- C2: Prozessorkern 2

## Patentansprüche

1. Verfahren zum Sicherstellen und/oder Aufrechterhalten der Funktion eines sicherheitskritischen Gesamtsystems eines Fahrzeugregelungssystems, bei dem
beim Auftreten eines Ereignisses (E, E1-E6) im Gesamtsystem das Ereignis (E, E1-E6) analysiert und Subfunktionalitäten ermittelt werden, die von dem aufgetretenen Ereignis (E, E1-E6) betroffen sind, und
das Gesamtsystem anhand der Ereignisanalyse in voneinander abhängige Subfunktionalitäten unterteilt wird, wobei
die Funktion des Gesamtsystems sichergestellt und/oder aufrechterhalten wird, indem Subfunktionalitäten in Abhängigkeit ihrer Verfügbarkeit gesteuert werden, und
die Subfunktionalitäten Graphen (G1, G2, G3) bilden, und
ein Funktionsidentifikator (FID) vorgesehen ist, der die jeweilige Subfunktionalität identifiziert und diese in ihrer Ausführung steuert, wobei
mittels des Funktionsidentifikators (FID) auf Basis der Ereignisanalyse eine logische Verfügbarkeitsaussage über die Subfunktionalitäten, "verfügbar" oder "nicht verfügbar", getroffen wird, und
die Graphen (G1, G2, G3) der Subfunktionalitäten gemeinsam verarbeitet werden, indem Graphen (G1, G2, G3) anhand gemeinsamer Subfunktionalitäten, deren Verfügbarkeit verteilt berechnet wird, verbunden sind, wobei
verteilte Subfunktionalitäten zweistufig realisiert werden, wobei zunächst lokale Verfügbarkeiten der Subfunktionalitäten der Graphen (G1, G2, G3) ermittelt und anschließend mit Subfunktionalitäten anderer Graphen (G1, G2, G3) systemweit ausgetauscht werden.

2. Verfahren nach Anspruch 1, **dadurch gekennzeichnet, dass** innerhalb des Gesamtsystems mehrere Graphen (G1, G2, G3) berechnet werden.

3. Verfahren nach Anspruch 1 oder 2, **dadurch gekennzeichnet, dass** die Graphen (G1, G2, G3) der Subfunktionalitäten aufeinander abgestimmt werden, wenn eine Kommunikation zwischen diesen verfügbar ist.

4. Verfahren nach mindestens einem der vorhergehenden Ansprüche, **dadurch gekennzeichnet, dass** anhand der Ereignisanalyse ein Ereignisstatus eines Monitors ermittelt wird, wobei die jeweiligen Monitore als Subfunktionalitäten behandelt werden und Bestandteil der Systemunterteilung sind.

5. Verfahren nach Anspruch 4, **dadurch gekennzeichnet, dass** jeder dafür konfigurierte Monitor automatisch auf einen Status gesetzt wird, welcher anzeigt, dass dieser nicht verfügbar ist, sobald er durch den Funktionsidentifikator (FID) deaktiviert wurde.

6. Verfahren nach mindestens einem der vorhergehenden Ansprüche, **dadurch gekennzeichnet, dass** eine Softwarekonfiguration und/oder Testfälle automatisch aus Anforderungen an das Gesamtsystem generiert werden.

7. Verfahren nach mindestens einem der vorhergehenden Ansprüche, **dadurch gekennzeichnet, dass** das Gesamtsystem in unterschiedliche Partitionen aufgeteilt ist, insbesondere umfassen die Partitionen eine Performance-Verarbeitungspartition (PPP) zur Verarbeitung, eine Sicherheits-Verarbeitungspartition (SPP) und eine elektrische Energieversorgung (EPS), insbesondere zur Parameter- und Sicherheitsüberwachung, sowie eine Ethernet-Partition (EP) zur Kommunikation.

8. Verfahren nach Anspruch 7, **dadurch gekennzeichnet, dass** die Verarbeitungspartition (PPP), die Sicherheits-Verarbeitungspartition (SPP) und die elektrische Energieversorgung (EPS) jeweils einen Prozessor aufweisen und ihre Prozessorressourcen und Programmausführung jeweils überwachen.

9. Verfahren nach Anspruch 7 oder 8, **dadurch gekennzeichnet, dass** eine gegenseitige Funktionsüberwachung der Verarbeitungspartition (PPP), der Sicherheits-Verarbeitungspartition (SPP) und der elektrischen Energieversorgung (EPS) vorgesehen ist.

10. Gesamtsystem eines Fahrzeugregelungssystems, welches konfiguriert ist, um seine Funktion insbesondere anhand einem Verfahren nach mindestens einem der vorhergehenden Ansprüche sicherzustellen und/oder aufrechtzuerhalten, bei dem
ein Verfügbarkeitsmanager (AvM) vorgesehen ist, der beim Auftreten eines Ereignisses (E, E1-E6) im Gesamtsystem das Ereignis (E, E1-E6) analysiert und Subfunktionalitäten ermittelt, die von dem aufgetretenen Ereignis (E, E1-E6) betroffen sind,
das Gesamtsystem anhand der Ereignisanalyse in voneinander abhängige Subfunktionalitäten unterteilt wird, wobei
die Funktion des Gesamtsystems sichergestellt und/oder aufrechterhalten wird, indem Subfunktionalitäten in Abhängigkeit ihrer Verfügbarkeit gesteuert werden, und
die Subfunktionalitäten Graphen (G1, G2, G3) bilden, und
ein Funktionsidentifikators (FID) vorgesehen ist, der die jeweilige Subfunktionalität identifiziert und diese in ihrer Ausführung steuert und dazu hergerichtet ist, auf Basis der Ereignisanalyse eine logische Verfügbarkeitsaussage über die Subfunktionalitäten, "verfügbar" oder "nicht verfügbar", zu treffen, und
die Graphen (G1, G2, G3) der Subfunktionalitäten innerhalb einer funktionellen Einheit gemeinsam verarbeitet werden, indem die Graphen (G1, G2, G3) anhand gemeinsamer Subfunktionalitäten, deren Verfügbarkeit verteilt berechnet wird, verbunden sind, wobei
verteilte Subfunktionalitäten zweistufig realisiert werden, wobei zunächst lokale Verfügbarkeiten der Subfunktionalitäten der Graphen (G1, G2, G3) ermittelt und anschließend mit Subfunktionalitäten anderer Graphen (G1, G2, G3) systemweit ausgetauscht werden.

11. Computerprogramm mit Programmcode zur Durchführung eines Verfahrens nach einem der Ansprüche 1-9, wenn das Computerprogramm in einem Computer ausgeführt wird.

## Claims

1. Method for ensuring and/or maintaining the function of a safety-critical overall system of a vehicle control system, in which
when an event (E, E1-E6) occurs in the overall system, the event (E, E1-E6) is analysed and sub-functionalities affected by the event (E, E1-E6) that has occurred are determined, and
the overall system is subdivided into mutually dependent sub-functionalities on the basis of the event analysis, wherein
the function of the overall system is ensured and/or maintained by controlling sub-functionalities depending on their availability, and
the sub-functionalities form graphs (G1, G2, G3), and
a function identifier (FID) is provided, which identifies the respective subfunctionality and controls the latter in terms of its execution, wherein
a logical availability statement about the sub-functionalities, "available" or "not available", is made by means of the function identifier (FID) on the basis of the event analysis, and
the graphs (G1, G2, G3) of the sub-functionalities are processed jointly by graphs (G1, G2, G3) being connected on the basis of common sub-functionalities whose availability is calculated in a distributed manner, wherein
distributed sub-functionalities are realized in a two-stage manner, wherein firstly local availabilities of the sub-functionalities of the graphs (G1, G2, G3) are determined and subsequently they are replaced with sub-functionalities of other graphs (G1, G2, G3) systemwide.

2. Method according to Claim 1, **characterized in that** a plurality of graphs (G1, G2, G3) are calculated within the overall system.

3. Method according to Claim 1 or 2, **characterized in that** the graphs (G1, G2, G3) of the sub-functionalities are coordinated with one another if communication between the latter is available.

4. Method according to at least one of the preceding claims, **characterized in that** an event status of a monitor is determined on the basis of the event analysis, wherein the respective monitors are treated as sub-functionalities and are part of the system subdivision.

5. Method according to Claim 4, **characterized in that** each monitor configured therefor is automatically set to a status which indicates that this monitor is not available as soon as it has been deactivated by the function identifier (FID).

6. Method according to at least one of the preceding claims, **characterized in that** a software configuration and/or test cases is/are automatically generated from requirements in respect of the overall system.

7. Method according to at least one of the preceding claims, **characterized in that** the overall system is divided into different partitions; in particular, the partitions comprise a performance processing partition (PPP) for processing, a safety processing partition (SPP) and an electric power supply (EPS), in particular for parameter and safety monitoring, and also an Ethernet partition (EP) for communication.

8. Method according to Claim 7, **characterized in that** the processing partition (PPP), the safety processing partition (SPP) and the electric power supply (EPS) each have a processor and each monitor their processor resources and program execution.

9. Method according to Claim 7 or 8, **characterized in that** mutual function monitoring of the processing partition (PPP), the safety processing partition (SPP) and the electric power supply (EPS) is provided.

10. Overall system of a vehicle control system configured to ensure and/or maintain its function in particular with the aid of a method according to at least one of the preceding claims, in which
an availability manager (AvM) is provided, which, when an event (E, E1-E6) occurs in the overall system, analyses the event (E, E1-E6) and determines sub-functionalities affected by the event (E, E1-E6) that has occurred,
the overall system is subdivided into mutually dependent sub-functionalities on the basis of the event analysis, wherein
the function of the overall system is ensured and/or maintained by controlling sub-functionalities depending on their availability, and
the sub-functionalities form graphs (G1, G2, G3), and
a function identifier (FID) is provided, which identifies the respective subfunctionality and controls the latter in terms of its execution and is prepared to make a logical availability statement about the sub-functionalities, "available" or "not available", on the basis of the event analysis, and
the graphs (G1, G2, G3) of the sub-functionalities are processed jointly within a functional unit by the graphs (G1, G2, G3) being connected on the basis of common sub-functionalities whose availability is calculated in a distributed manner, wherein
distributed sub-functionalities are realized in a two-stage manner, wherein firstly local availabilities of the sub-functionalities of the graphs (G1, G2, G3) are determined and subsequently they are replaced with sub-functionalities of other graphs (G1, G2, G3) systemwide.

11. Computer program having program code for carrying out a method according to any of Claims 1-9 when the computer program is executed in a computer.

## Revendications

1. Procédé pour garantir et/ou maintenir le fonctionnement d'un système global critique pour la sécurité d'un système de régulation de véhicule, avec lequel lors de la survenance d'un événement (E, E1-E6) dans le système global, l'événement (E, E1-E6) est analysé et des fonctionnalités secondaires, qui sont concernées par l'événement (E, E1-E6) qui est survenu, sont déterminées, et
le système global est subdivisé en fonctionnalités secondaires interdépendantes les unes des autres à l'aide de l'analyse d'événement,
le fonctionnement du système global étant garanti et/ou maintenu en commandant les fonctionnalités secondaires en fonction de leur disponibilité, et
les fonctionnalités secondaires formant des graphes (G1, G2, G3), et
un identificateur de fonction (FID) étant présent, lequel identifie la fonctionnalité secondaire respective et commande celle-ci dans son exécution,
une affirmation logique de disponibilité à propos des fonctionnalités secondaires, « disponible » ou « non disponible », étant faite au moyen de l'identificateur de fonction (FID) sur la base de l'analyse d'événement, et
les graphes (G1, G2, G3) des fonctionnalités secondaires étant traités en commun en ce que les graphes (G1, G2, G3) sont reliés à l'aide de fonctionnalités secondaires communes dont la disponibilité est calculée de manière distribuée,
les fonctionnalités secondaires distribuées sont réalisées en deux étapes, les disponibilités locales des fonctionnalités secondaires des graphes (G1, G2, G3) étant tout d'abord déterminées, et ensuite échangées à l'échelle du système avec les fonctionnalités secondaires d'autres graphes (G1, G2, G3).

2. Procédé selon la revendication 1, **caractérisé en ce que** plusieurs graphes (G1, G2, G3) sont calculés à l'intérieur du système global.

3. Procédé selon la revendication 1 ou 2, **caractérisé en ce que** les graphes (G1, G2, G3) des fonctionnalités secondaires sont accordés les uns sur les autres lorsqu'une communication entre ceux-ci est disponible.

4. Procédé selon au moins l'une des revendications précédentes, **caractérisé en ce qu'**un état d'événement d'un moniteur est déterminé à l'aide de l'analyse d'événement, les moniteurs respectifs étant traités comme des fonctionnalités secondaires et étant des éléments constitutifs de la subdivision du système.

5. Procédé selon la revendication 4, **caractérisé en ce que** chaque moniteur configuré à cet effet est automatiquement placé dans un état qui indique que celuici n'est pas disponible dès qu'il a été désactivé par l'identificateur de fonction (FID).

6. Procédé selon au moins l'une des revendications précédentes, **caractérisé en ce qu'**une configuration logicielle et/ou des cas types sont générés automatiquement à partir d'exigences imposées au système global.

7. Procédé selon au moins l'une des revendications précédentes, **caractérisé en ce que** le système global est divisé en différentes partitions, les partitions comprenant notamment une partition de traitement des performances (PPP) destinée au traitement, une partition de traitement de sécurité (SPP) et une alimentation en énergie électrique (EPS), notamment pour la surveillance des paramètres et de la sécurité, ainsi qu'une partition Ethernet (EP) destinée à la communication.

8. Procédé selon la revendication 7, **caractérisé en ce que** la partition de traitement (PPP), la partition de traitement de sécurité (SPP) et l'alimentation en énergie électrique (EPS) possèdent respectivement un processeur et surveillent respectivement leurs ressources de processeur et l'exécution de programme.

9. Procédé selon la revendication 7 ou 8, **caractérisé en ce qu'**une surveillance mutuelle du fonctionnement de la partition de traitement (PPP), de la partition de traitement de sécurité (SPP) et de l'alimentation en énergie électrique (EPS) est présente.

10. Système global d'un système de régulation de véhicule, lequel est configuré pour garantir et/ou maintenir son fonctionnement, notamment à l'aide d'un procédé selon au moins l'une des revendications précédentes, avec lequel
un gestionnaire de disponibilité (AvM) est présent, qui, lors de la survenance d'un événement (E, E1-E6) dans le système global, analyse l'événement (E, E1-E6) et détermine des fonctionnalités secondaires, qui sont concernées par l'événement (E, E1-E6) qui est survenu,
le système global est subdivisé en fonctionnalités secondaires interdépendantes les unes des autres à l'aide de l'analyse d'événement,
le fonctionnement du système global étant garanti et/ou maintenu en commandant les fonctionnalités secondaires en fonction de leur disponibilité, et
les fonctionnalités secondaires formant des graphes (G1, G2, G3), et
un identificateur de fonction (FID) étant présent, lequel identifie la fonctionnalité secondaire respective et commande celle-ci dans son exécution et est conçu pour faire une affirmation logique de disponibilité à propos des fonctionnalités secondaires, « disponible » ou « non disponible », sur la base de l'analyse d'événement, et
les graphes (G1, G2, G3) des fonctionnalités secondaires étant traités en commun au sein d'une unité fonctionnelle en ce que les graphes (G1, G2, G3) sont reliés à l'aide de fonctionnalités secondaires communes dont la disponibilité est calculée de manière distribuée,
les fonctionnalités secondaires distribuées sont réalisées en deux étapes, les disponibilités locales des fonctionnalités secondaires des graphes (G1, G2, G3) étant tout d'abord déterminées, et ensuite échangées à l'échelle du système avec les fonctionnalités secondaires d'autres graphes (G1, G2, G3).

11. Programme informatique comprenant un code de programme destiné à la mise en oeuvre d'un procédé selon l'une des revendications 1 à 9, lorsque le programme informatique est exécuté dans un ordinateur.
